# EUROPEAN PATENT APPLICATION

(11) **EP 0 980 176 A1**
(43) Date of publication of application: **16.02.2000**
(21) Application number: 99306109.2
(22) Date of filing: 02.08.1999
(51) Int. Cl.: H04M 3/42

(54) **User mapped authorization codes for central office feature services**

(30) Priority: 13.08.1998 US 133685
(71) Applicant: LUCENT TECHNOLOGIES INC., Murray Hill, New Jersey 07974-0636 (US)
(72) Inventor: Ubowski, Richard M., Harleysville, Pennsylvania 19438 (US)
(74) Representative: Watts, Christopher Malcolm Kelway, Dr.

(57) **Abstract**

The present invention allows for programmability of feature activation buttons on a telephone with authorization codes downloaded from a central office. In this aspect, a central office includes a conventional feature authorization database for verifying the pre-authorized feature services applicable to particular telephone lines serviced by that central office, and a feature authorization data download module including a database of authorization codes necessary to activate and/or deactivate any applicable central office feature services. Authorization codes are downloaded from the database to the telephone to allow one-touch type activation and/or deactivation of relevant central office feature services. In another aspect, the present invention associates central office feature services with individual authorized users rather than only with telephone lines to allow portability of central office feature services from telephone line to telephone line as a user travels away from their base telephone line. In this aspect, a central office includes a user mapped feature service database. If authorized to utilize the requested feature service, the central office queries the user mapped feature service database and allocates appropriate feature service resources as necessary to provide the authorized user at their present telephone line with the requested central office feature service(s). In some embodiment, the activation of the authorized central office feature services may be timed for use on a telephone line such that they expire after a predetermined time, after the completion of the present telephone call, etc.

## Description

### Field of the Invention

This invention relates generally to telephone features provided by a central office to customer premises equipment. More particularly, it relates to the programmability of features relating to services provided by a telephone central office to a subscriber.

### Background of Related Art

Almost everyone in all walks of life utilize telephones at one time or another. The usefulness of telephone service is without question.

In addition to basic telephone service, many of today's telephone companies have the ability to provide additional feature services to a subscriber, many times for a fee. For instance, common central office feature services available from many telephone central offices include automatic call recording (ACR), call blocking, call unblocking, call forwarding, call waiting, and/or tone blocking. These and other features provided by a central office to a subscriber telephone line in communication with that central office provide features which are desirable because they enhance the telephone communications needs of many users.

Central office feature services such as those described are typically made available by pre-arrangement with the telephone company for such feature service to be activated for all telephones on a particular telephone line. Upon such pre-arrangement with a central office, pre-authorization is provided to the user which typically includes notification to the user of a unique activation code established for each desired central office feature service authorized for use by the subscriber. Unfortunately, if a user is to utilize more than one telephone line, the central office feature service must be activated separately for each telephone line. This typically multiplies the costs of the feature service from the perspective of the subscriber, and tends to waste resources at the central office, particularly if a single user moves from one telephone line to another, making use of only one of the telephone lines at any one time even though both telephone lines have a particular central office feature service activated.

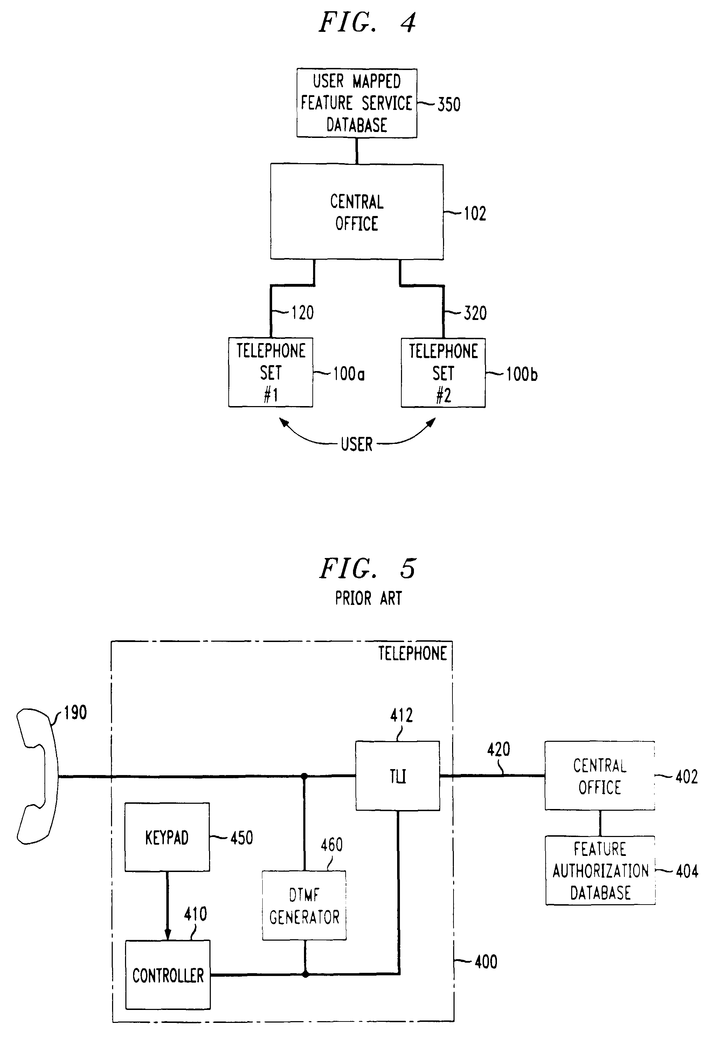

Central office feature services are typically initially activated by an administrator of the telephone company, who generates feature service activation information at the central office. Fig. 5 shows the relevant portions of a conventional feature service authorization.

The pre-authorized telephone feature services are activatable by a subscriber upon input of a series of pre-determined authorization codes. These authorization codes are typically input by the user with a series of dual tone, multiple frequency (DTMF) tones corresponding to a particular authorization code for activating a particular central office feature service for that telephone line.

For instance, as shown in Fig. 5, a central office **402** maintains a feature authorization database **404** including authorization codes relevant to a particular telephone line **420**. The user uses a keypad **450** on a telephone **400** connected to the relevant telephone line **420** to enter the authorization code. The keypresses on the keypad **450** are detected by a controller **410**, which causes a dual tone, multiple frequency (DTMF) generator **460** to output tones to the telephone line **420** through an appropriate telephone line interface (TLI) **412**.

However, these authorization codes are typically rather cumbersome both to memorize as well as to input via a telephone, causing the relevant central office feature service to be not easily activated. Moreover, different telephone company central offices (i.e., regional bell operating companies (RBOCs) in the U.S.) or even different countries typically require different activation codes, multiplying the difficulty of memorization and/or input of authorization codes relevant to different telephone lines.

There is thus a need for a simplified method and apparatus for maintaining central office feature service authorization codes at a customer premises equipment and/or for activating central office feature services. Moreover, there is a need to reduce the potential waste in resources caused by the provision of multiple sources of a particular central office feature service, especially in the case where a single user is likely to move from telephone line to telephone line (e.g., when traveling).

### Summary Of The Invention

In accordance with the principles of the present invention, a user mapped feature service database comprises data relating to a plurality of users, and data relating to at least one relocatable central office feature service authorized for use by each of the plurality of users at any time at any of a plurality of telephone lines.

A method of activating and deactivating a central office feature service in accordance with the principles of the present invention comprises uploading from a telephone an authorization code relating to a central office feature service. and audibly indicating a status of the central office feature service to the telephone.

### Brief Description Of The Drawings

Features and advantages of the present invention will become apparent to those skilled in the art from the following description with reference to the drawings, in which:

Fig. 1 shows a feature telephone in combination with a feature authorization data download module at a central office, in accordance with the principles of one aspect of the present invention.

Fig. 2 shows a process of downloading authorization codes to a feature telephone such as shown in Fig. 1, in accordance with the principles of the present invention.

Fig. 3 shows a process of activating or deactivating central office feature services by uploading authorization codes, in accordance with the principles of another aspect of the present invention.

Fig. 4 shows the use of a user mapped feature database at a central office to allow portability of central office feature services among telephone lines, in accordance with another aspect of the present invention.

Fig. 5 shows a conventional central office allowing use of feature services on a particular telephone line upon entry of a predetermined authorization code at a telephone on a telephone line.

### Detailed Description Of Illustrative Embodiments

The present invention has multiple aspects, allowing ease of activation and deactivation of central office feature services.

Firstly, the present invention provides for easy activation and deactivation of central office feature services by providing a feature authorization data download module at a central office to allow downloading and storage of cumbersome authorization codes at an authorized telephone. Once stored in local memory at a telephone, the cumbersome feature service authorization codes may be utilized as necessary to allow one-touch button control of activation and/or deactivation of the relevant central office feature service by the central office.

Secondly, the present invention allows portability of authorized central office feature services among any of a plurality of telephone lines by providing a user mapped feature database in communication with a central office. The user mapped feature database associates central office feature services with particular users rather than with particular telephone lines, allowing that particular user to travel from telephone line to telephone line and yet continue to utilize their personally authorized feature services at whatever telephone line they may be using at the time.

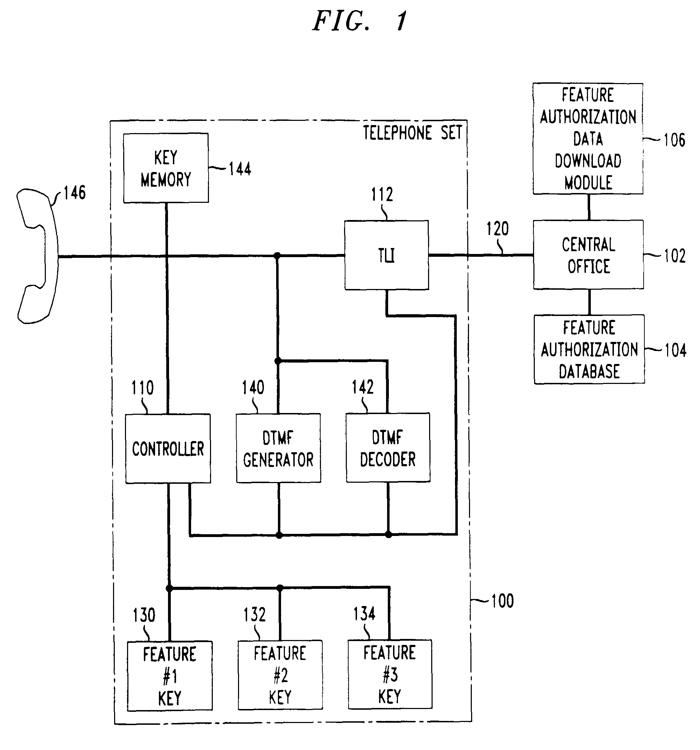

Fig. 1 shows the relevant portions of a feature telephone in combination with a feature authorization data download module at a central office in accordance with the principles of the present invention.

In particular, a central office **102** includes a conventional feature authorization database **104** for verifying the pre-authorized feature services applicable to particular telephone lines serviced by that central office **102**. However, in addition, the central office **102** includes a feature authorization data download module **106**.

The feature authorization data download module **106** includes a database of authorization codes necessary to activate and/or deactivate any applicable central office feature services. Moreover, the feature authorization data download module **106** further includes a data transmitter for downloading data over a telephone line using, e.g., DTMF tones or frequency shift keying (FSK).

The telephone **100** shown in Fig. 1 includes a controller **110** and a telephone line interface **112**, which provide conventional operability of the telephone **100**. However, the telephone **100** further includes a key memory **144** (e.g., Flash memory or other non-volatile memory accessible by the controller **110**) to store authorization data obtained from the feature authorization data download module **106** and downloaded from the central office **102**. Locations of the key memory **144** are associated with individual feature keys **130**-**134** such that when a particular feature key **130**-**134** is activated (e.g., depressed), the controller **110** obtains the authorization data stored in the relevant portion of the key memory **144** and causes the authorization data to be transmitted to the central office **102**. The authorization data may be transmitted using a DTMF generator **140**, and acknowledgment and other information received using a DTMF decoder **142**.

With respect to the first aspect of the present invention, authorization codes for activating or deactivating pre-authorized central office feature services may be downloaded from the central office upon manual request by the user, e.g., by inputting an appropriate request code using a DTMF keypad. Alternatively, the authorization codes may be automatically obtained by a controller in a dial-up session with the central office, preferably during an unused period for the telephone.

Thus, a telephone may be programmed to automatically dial a preset telephone number corresponding to a feature authorization database for a central office or other relevant location upon initial powerup. In this case, a flag may be set in memory of the telephone to prevent subsequent automatic dialing to the central office upon powerup unless manually initiated. This is particularly useful in areas prone to power outages to avoid unnecessary telephone usage.

In any case, the authorizing activation and/or deactivation codes may be downloaded from the central office to any telephone upon receipt at the central office of a request for the same using any appropriate data transmission technique, e.g., using DTMF tones or frequency shift keying (FSK), both of which are well known techniques in the art.

DTMF data transfers may be accomplished by associating a particular hexadecimal digit with each of 16 DTMF tones. The particular code sent may be of any practical length suitable to the application. The telephone merely need include a DTMF decoder, which may be accomplished either in software in the controller of the telephone set, or in a separate, dedicated circuit. The controller may be any suitable processor, e.g., a digital signal processor (DSP), a microprocessor, or a microcontroller.

DTMF data transfers can be accomplished without requiring a data modem, and therefore is preferred in cost sensitive applications. However, the present invention relates equally to other data transfer techniques. For instance, FSK can be accomplished using a modem both at the telephone set and at the receiving central office location.

After the authorizing activation and/or deactivation codes are downloaded to the telephone **100**, dedicated feature service buttons **130**-**134** on the telephone **100** may be automatically programmed by the controller **110** by association with authorization data stored in non-volatile memory, e.g., Flash memory.

The authorization data may be stored in any appropriate memory location accessible by the controller **110**.

The stored authorization data is recalled from memory when an appropriate feature service button **130**-**134** is activated (e.g., depressed) and output to the telephone line **120** through a telephone line interface (TLI) **112**.

Storage of the authorization data and uploading of the same to the central office **102** upon activation of a feature service button **130**-**134** at the telephone **100** allows for the institution of longer, more secure authorization codes because of the virtually unlimited amount of authorization data which can be stored in non-volatile memory.

Moreover, the 'invisible' nature of the transferring of the authorization data to and from the central office **102** allows for easy adaptation to higher security schemes. For instance, authorization codes may be occasionally changed for increased security, and for accommodation of different activation codes utilized by different telephone company central offices.

Although one feature service button may be associated with the activation of more than one feature service, it is preferred that a dedicated feature service button be provided for each central office feature service to be accommodated on a telephone **100**. Alternatively, a dedicated sequence of the standard 12- or 16-key alphanumeric keypad can be used instead of dedicated buttons on the telephone **100**. Thus, e.g., separate feature service button(s) can be programmed for each of ACR, outgoing call unblock, call forwarding, call waiting, and/or tone block. The feature service buttons may be generically referred to on the telephone **100** as 'feature service #1', 'feature service #2', etc., and labeled by the user as desired.

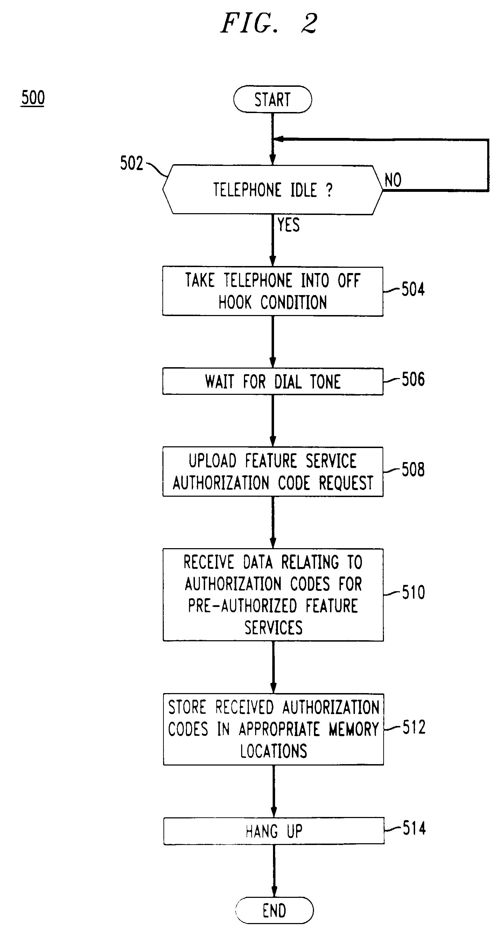

Fig. 2 shows a process **500** of downloading feature service authorization codes from a central office to a particular telephone **100** to allow one-touch type activation and/or deactivation of relevant central office feature services. While Fig. 2 shows one example of an automatic download of authorization data from a central office, the principles of the present invention are equally applicable to a manually prompted download of authorization data from the central office.

In step **502** of Fig. 2, the telephone **100** such as that shown in Fig. 1 preferably waits until an idle period, e.g., when the telephone **100** is on-hook for a long period of time. More preferably, an idle period is determined at a time in which it is unlikely that the telephone **100** will be utilized, e.g., after 2:00 am. If the process **500** is interrupted by an attempted use of the telephone **100** by a user, the process will preferably terminate immediately and retry again later, e.g., after a predetermined length of time.

In step **504**, the TLI **112** places the telephone line **120** in an off-hook condition.

In step **506**, the controller **110** waits until a dial tone is sensed from the central office **102** before proceeding.

In step **508**, it is preferable that the controller **110** upload a request to the central office **102** for a return download of any and all feature services pre-authorized for that particular telephone line **120**. Of course, the data communications between the telephone **100** and the central office **102** may utilize any appropriate handshaking and/or error control (not shown) as necessary.

In response to step **508**, data relating to authorization codes for pre-authorized central office feature services are received in step **510**. This data may relate to a particular feature service, to a particular telephone line, and/or to a particular user on a particular telephone line.

In step **512**, the received authorization data codes are stored in appropriate memory locations associated with the activation of desired feature service keys **130**-**134**. Thus, after the authorization data is stored in the appropriate memory locations, upon activation of the relevant feature service key **130**-**134**. the controller **110** will cause an appropriate authorized activation or deactivation code to be uploaded back to the central office **102** to signal the desired activation or deactivation of a particular feature service to be carried out by the central office **102**.

In step **514**, the TLI **112** will hang up the telephone **100** by placing the telephone line **120** in an on-hook condition.

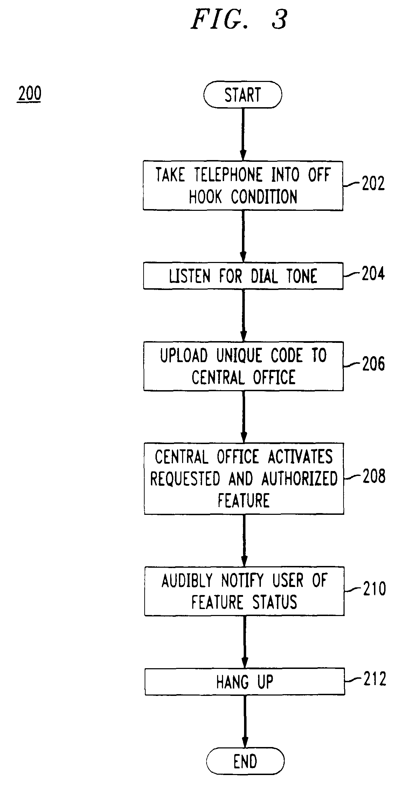

Fig. 3 shows the process **200** of activating or deactivating a particular central office feature service with the telephone **100** shown in Fig. 1 after it is programmed with appropriate authorization activation and/or deactivation codes.

In particular, a user causes the telephone **100** to be placed in an off-hook condition as shown in step **202** in Fig. 3, e.g., by lifting the receiver **146** (Fig. 1). Alternatively, the telephone line **120** can be automatically taken off-hook by the controller **110** at an appropriate time, e.g., during an idle period, without the need for manual intervention.

In step **204**, a dial tone is sensed on the telephone line **120** by the user (or by the controller **110** if the process **200** is automatically controlled by the controller **110**).

After the dial tone is received from the central office, the desired information such as the pre-stored authorization activation and/or deactivation code is uploaded to the central office **102** as shown in step **206**. The particular authorization activation and/or deactivation data uploaded to the central office **102** may relate to a request to flip the status of the central office feature service. Thus, if the relevant central office feature service is currently disabled or deactivated (but pre-authorized), the central office would, upon receipt of the flip request, enable or activate the relevant feature service.

Of course, separate buttons for activation and deactivation of any central office feature service may be provided. Moreover, feature service activation and/or deactivation may be combined into a single feature key button **130**-**134** for activation or deactivation of a plurality of feature services at any one time by the central office **102**. For instance, the central office feature services may be individually activated by activation of any of a plurality of feature service buttons, but may be deactivated together as a group by the activation of another single deactivate feature key.

In step **208**, the central office **102** performs the otherwise conventional tasks necessary to reserve and appropriate the necessary resources to verify the authority of the requesting telephone line to receive the requested feature service, and to activate (or deactivate) any requested, pre-authorized central office feature services.

The status of the central office feature services, authorized and/or unauthorized, is preferably notified to the user audibly, over the telephone line **120**, e.g., by predetermined messages played by the central office **102** to the user, as shown in step **210**. The message may say, e.g., "Your authorized feature service status is as follows: call blocking, activated for (202) 555-1212; call waiting, deactivated". However, information may be sent as data, e.g., as is sent in Caller ID/Call Waiting (CIDCW) type feature services.

The feature activation can be displayed on a display at the telephone set. Moreover, in cost sensitive applications, a display utilized for other functions, e.g., for showing call related information such as Caller ID information, may double as a display for feature programming and activation information. For instance, if a programmed feature button is momentarily depressed, e.g., for less than one second, this may be interpreted by the controller of the telephone set as a request to display information relating to the programming of that feature button. The display may then provide a display of the programmed activation code. Alternatively or additionally, the display may indicate the relevant feature that the momentarily depressed key is programmed for, and/or the status of the feature at the central office. The display may continue to display the central office feature information indefinitely or for a fixed period of time.

The central office feature activation or deactivation process **200** ends in step **212** when the telephone line **120** is placed in an on-hook condition.

Another important aspect of the present invention relates to the association of central office feature services with particular users rather than only to particular telephone lines (i.e., particular telephone numbers). This allows a user to travel from telephone line to telephone line and essentially take their central office feature service with them.

Fig. 4 shows a central office **102** including a user mapped feature service database **350**. Fig. 4 also depicts a plurality of telephone lines **120**, **320** each associated with a respective telephone **100**, e.g., as shown in Fig. 1.

In accordance with this aspect of the present invention, authorization codes may be input by a user at any telephone **100** on any telephone line **120**, **320** having access to the relevant central office feature services. However, in this case, the authorization codes will relate not to an authorized telephone line but instead or additionally to a particular user.

For instance, upon receipt of a relevant authorization code, the central office **102** will query the user mapped feature service database **350** to verify the authority of the user to utilize the requested central office feature service. If authorized to utilize the requested feature service, the central office **102** will then reserve and appropriate any necessary resources to provide the authorized user at their present telephone line with the requested central office feature service(s).

The user-based central office feature service in accordance with this aspect of the present invention may be permanent in nature, or it may alternatively be temporary in nature. For instance, the desired central office feature services may be active at the last-requested telephone line until otherwise deactivated by another request from the same user at a different telephone line.

When a feature service is active for an authorized user on one telephone line but requested for the same user at another telephone line, the central office feature service is preferably 'moved' to the user at the latest-requested telephone line by the central office **102**. This 'movement' is accomplished by deactivating that particular feature service at the prior telephone line and activating the same feature service at the new telephone line.

Moreover, the feature service activation may be timed for use on a telephone line. For instance, the relevant central office feature service may be provided at a particular telephone line for 1 week, 1 day, etc. after activation, unless further directed.

Alternatively, the central office feature services may be activated only for the duration of a call. Thus, for instance, call waiting may be activated for an authorized user only during the duration of a call using a particular telephone line. In this case, the central office **102** may prefer to not deactivate the same feature service at the base or previous telephone line.

The user may be identified by a credit card number such as a calling card, and thus have any pre-authorized central office feature services follow them wherever they go. Thus, upon recognition of an authorized user by way of the user's entry of a credit card or calling card number at a telephone on any telephone line, authorized central office feature services may be appropriated for that caller at the telephone line from which they are calling.

Moreover, the user-based central office feature service may be timed such that, e.g., during the mornings the authorized central office feature services are activated on one particular telephone line (e.g., the user's office) while in the evenings the same central office feature services may be 'moved' to or otherwise activated at another telephone line (e.g., at the user's home).

While the invention has been described with reference to the exemplary embodiments thereof, those skilled in the art will be able to make various modifications to the described embodiments of the invention without departing from the scope of the invention.

## Claims

1. A user mapped feature service database, comprising:
data relating to a plurality of users;
data relating to at least one relocatable central office feature service authorized for use by each of said plurality of users at any of a plurality of telephone lines.

2. The user mapped feature service database according to claim 1, further comprising:
data relating to a telephone line at which each of said plurality of users is currently authorized to utilize said relocatable central office feature service.

3. A method of activating and deactivating a central office feature service, comprising:
uploading from a telephone an authorization code relating to a central office feature service; and
audibly indicating to said telephone a status of said central office feature service.

4. The method of activating and deactivating a central office feature service according to claim 3, wherein:
said status of said central office feature service is one of active and inactive.

5. The method of activating and deactivating a central office feature service according to claim 3 or claim 4 wherein:
said authorization code relates to a specific user.

6. The method of activating and deactivating a central office feature service according to any of claims 3 to 5, further comprising:
upon receipt of an activating authorization code relating to a specific central office feature service, allocating resources at a central office servicing a telephone line for said telephone necessary to provide a user of said telephone with said central office feature service at said telephone line.

7. The method of activating and deactivating a central office feature service according to claim 6, wherein:
said resources are allocated for a predetermined period of time.

8. The method of activating and deactivating a central office feature service according to claim 6, wherein:
said resources are allocated for a length of a telephone call made on said telephone line.

9. The method of activating and deactivating a central office feature service according to claim 6, further comprising:
upon allocation of said resources, deallocating resources at a central office servicing a prior telephone line utilized by said user relating to a same central office feature service.

10. Apparatus for activating and deactivating a central office feature service, comprising means arranged to carry out a method as claimed in any of claims 3 to 9.
